# DEMANDE DE BREVET EUROPEEN

(11) **EP 3 738 661 A1**
(43) Date de publication de la demande: **18.11.2020**
(21) Numéro de dépôt: 20165376.3
(22) Date de dépôt: 24.03.2020
(51) Int. Cl.: B01D 46/24, B01D 53/94

(54) **FILTRE A PARTICULES CATALYSE POUR MOTEUR A COMBUSTION INTERNE A ALLUMAGE COMMANDE**

(30) Priorité: 08.04.2019 FR 1903728
(71) Demandeur: Renault S.A.S., 92100 Boulogne-Billancourt (FR)
(72) Inventeur: DEDIEU, Marc, 91290 LA NORVILLE (FR)

(57) **Abrégé**

L'invention propose un filtre à particules catalysé pour moteur à allumage commandé du type à écoulement par les parois, comprenant des canaux d'entrée bouchonnés à leur sortie et des canaux de sortie bouchonnés à leur entrée, séparés par des parois imprégnées d'un revêtement d'imprégnateur comportant une composition catalytique comprenant une charge 'imprégnation relativement faible avec une charge en métaux du groupe du platine relativement faible pour limiter la contrepression dans le filtre.

La principale caractéristique du filtre selon l'invention est qu'il présente une imprégnation additionnelle sur sa face d'entrée et sur une longueur d'entrée des canaux d'entrée qui ne dépasse pas la profondeur des bouchons obturant les canaux de sortie, avec une charge d'imprégnation relativement élevée et une charge en métaux du groupe du platine relativement élevée. Cette imprégnation additionnelle est comparable à celle d'un catalyseur trois voies rapproché classique.

## Description

### Domaine technique de l'invention

La présente invention concerne un filtre à particules catalysé pour la dépollution des gaz de combustion d'un moteur à combustion interne du type à allumage commandé. Elle trouve une application particulièrement avantageuse dans les véhicules automobiles équipés de tels moteurs.

### Etat de la technique

Les moteurs à combustion interne du type à allumage commandé (fonctionnant notamment à l'essence) des véhicules automobiles sont équipés depuis de nombreuses années d'au moins un catalyseur trois voies, de manière à traiter les molécules polluantes d'hydrocarbures imbrûlés (HC), de monoxyde de carbone (CO) et d'oxydes d'azote (NOx) qui sont émises dans les gaz de combustion desdits moteurs.

De manière connue en soi, un tel catalyseur se présente généralement sous la forme d'un monolithe de substrat céramique ou métallique à écoulement continu, comportant une pluralité de canaux longitudinaux à travers lesquels les gaz de combustion s'écoulent de part en part. Les parois latérales délimitant les canaux d'écoulement des gaz sont imprégnées d'au moins un revêtement imprégnateur (dit aussi « washcoat » en anglais) comprenant une composition catalytique comprenant au moins un métal du groupe du platine (dit aussi « PGM » selon l'acronyme anglais pour : Platinum Group Metal). Ces métaux précieux réagissent avec les molécules polluantes à la surface des différentes parois des canaux et permettent leur transformation en molécules moins polluantes.

La législation applicable aux véhicules automobiles, notamment en Europe, tend en outre à limiter les émissions en nombre et en masse des particules fines (PM) par les véhicules équipés de moteurs à allumage commandé, ce qui rend nécessaire l'utilisation d'un filtre à particules, à l'instar des véhicules équipés de moteurs diesel.

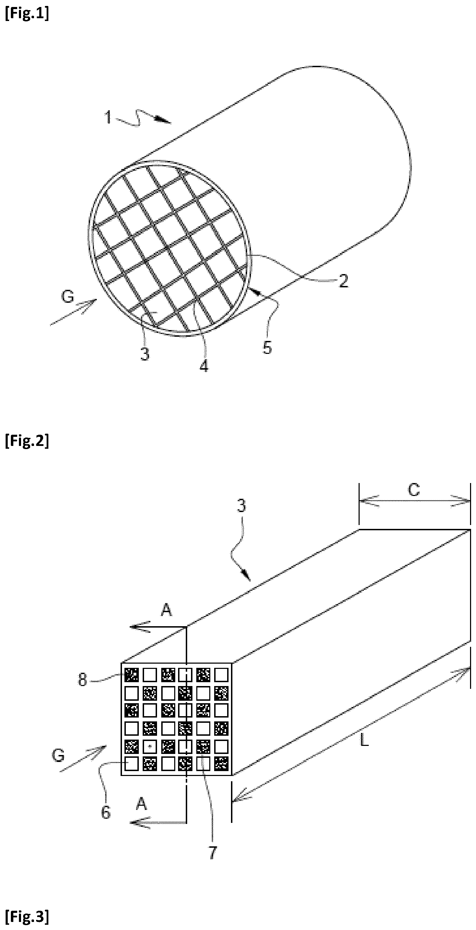

Bien qu'il soit possible d'équiper le circuit d'échappement d'un moteur à allumage commandé de deux monolithes de substrat distincts pour traiter d'une part les molécules polluantes habituellement transformées par un catalyseur trois voies (HC, CO, et NOx), et d'autre part, les particules fines (désignées aussi par « PM », de l'acronyme anglais pour Particulate Matters), il s'est avéré avantageux pour des raisons d'encombrement de grouper les deux fonctions de traitement dans un seul monolithe de substrat, dit aussi filtre à particules catalysé, conformément par exemple aux figures 1 à 3 annexées.

La figure 1 est une vue en perspective cavalière qui représente schématiquement un exemple de structure d'un tel filtre à particules catalysé (connu aussi sous l'appellation GPFc , de l'acronyme anglais pour : catalyzed Gasoline Particulate Filter).Le filtre 1 comprend un bloc structuré en nid d'abeille 2, ou monolithe de substrat 2, dans lequel une pluralité de corps 3, par exemple des corps en céramique cuits en nid d'abeille 3 (au nombre de 36 sur la figure), en forme de piliers, sont combinés les uns aux autres avec une couche d'adhésif 4, ou ciment 4. De manière non limitative, les segments 3 les moins centraux du monolithe de substrat 2 peuvent être taillés de telle sorte que le monolithe de substrat 2 présente par exemple une forme de cylindre de révolution. Un matériau étanche 5, ou peau externe 5, recouvre le monolithe de substrat 2 ainsi délimité sur toute sa surface latérale cylindrique. Le filtre à particules ainsi constitué est généralement logé dans une enveloppe métallique (ou « canning », non représenté) monté dans le circuit d'échappement du moteur. Les gaz de combustion émis par le moteur circulent dans le filtre à particules 1 dans le sens de la flèche G indiquée sur la figure 1.

La figure 2 est une vue en perspective cavalière qui représente schématiquement un des segments 3 qui composent le monolithe de substrat 2. Le segment 3 se présente ici sous la forme d'un pilier, plus précisément d'un parallélépipède de longueur L (dans le sens de circulation des gaz figuré par la flèche G) et de base carrée de côté C. Sa structure se compose d'un grand nombre de canaux 6, ou cellules 6, placés longitudinalement (i.e. dans le sens de circulation des gaz) et parallèlement les uns par rapport aux autres, avec une paroi 7 interposée entre elles. Ici, les canaux 6 ont de manière non limitative une section carrée (dans un plan perpendiculaire au sens de circulation des gaz). Dans le cas illustré par la figure, tous les canaux ont la même taille et sont séparés par des parois d'épaisseur identique. En variante non représentée, les canaux peuvent présenter des formes différentes, par exemple à section octogonale ou hexagonale, et/ou présenter des parois d'épaisseur variable. L'une ou l'autre des extrémités de chaque canal est obturée par un bouchon étanche.

La figure 3 est une coupe selon le plan A-A de la figure 2, qui illustre la circulation des gaz de combustion en provenance du moteur à travers un segment 3 du filtre à particules. Les gaz arrivent sur une face d'entrée des segments 3 dans le sens de la flèche G, et ressortent par une face de sortie. Les gaz pénètrent dans ceux des canaux 6 dont l'extrémité amont n'est pas obturée par un bouchon 8, dits aussi canaux d'entrée. Les gaz ressortent du segment 3 par les canaux 6 adjacents auxdits canaux d'entrée et dont l'extrémité aval n'est pas obturée par un bouchon 8, dits aussi canaux de sortie, après avoir traversé la paroi 7 qui sépare les deux canaux adjacents sur quasiment toute sa longueur, à l'exception des tronçons d'entrée et de sortie qui jouxtent les bouchons.

Ainsi, les différentes parois 7 ont une capacité de filtration (ou plus précisément : de retenue) des particules fines PM émises dans les gaz de combustion du moteur, que n'a pas un substrat de monolithe classique du type à écoulement continu. Un tel filtre est dit à écoulement par les parois (« wall through » selon la désignation anglaise). D'autre part, le traitement des autres molécules polluantes (HC, CO et NOx) qui sont habituellement transformées par un catalyseur trois voies, est assuré dans un tel filtre 1 grâce à une imprégnation du monolithe de substrat par au moins un revêtement d'imprégnateur comprenant une composition catalytique comprenant au moins un métal du groupe du platine (PGM). Le revêtement imprègne la surface latérale des canaux sur au moins une partie de leur longueur, de préférence sur la totalité de leur longueur, et il se peut qu'il pénètre plus ou moins profondément à l'intérieur de la structure poreuse des parois 7 elle-même.

Dans un autre mode de réalisation très courant d'un filtre à écoulement par les parois non illustré par les figures 1 à 3, le monolithe de substrat peut être constitué d'un seul bloc extrudé, qui est façonné directement à sa forme (par exemple cylindrique) au moment où la matière qui le compose est poussée et modelée. En outre, la peau 5 est généralement constituée naturellement lors de l'extrusion par la matière elle-même.

Bien qu'ils permettent de combiner les fonctions d'un catalyseur trois voies et d'un filtre à particules dans un encombrement réduit, les filtre à particules catalysés, qui sont du type à écoulement par les parois, sont moins efficaces que les catalyseurs à écoulement continu parce-qu'il est nécessaire de limiter sensiblement l'imprégnation du monolithe de substrat, afin de conserver une contre-pression dans le filtre qui permette aux gaz de traverser les parois.

Par exemple, sur un catalyseur trois voies classique, la quantité de revêtement imprégnateur, ou charge d'imprégnation WCL (selon l'acronyme anglais « wash coat loading ») est le plus souvent supérieure ou égale à 200 g/l, par exemple comprise entre 200 et 250 g/l et ce revêtement comprend une charge en métaux précieux, plus précisément une charge en métaux du groupe du platine (ou PGM) qui dépend de la localisation du catalyseur dans le circuit d'échappement du moteur. La charge peut être de l'ordre de quelques dizaines à quelques centaines de grammes par pied cubique (g/ft³), par exemple comprise entre 60 et 250 g/ft³ , pour un pré-catalyseur ou catalyseur dit « rapproché », c'est-à-dire monté à proximité immédiate du moteur, généralement dans le compartiment moteur du véhicule, pour une montée en température rapide. La charge peut être de l'ordre de quelques dizaines de grammes par pied cubique, par exemple comprise entre 10 et 60 g/ft³, dans le cas d'un catalyseur principal qui peut être monté directement derrière le pré-catalyseur ou en position « sous caisse ».c'est-à-dire monté à distance du moteur, sous la caisse du véhicule.

Dans le cas d'un filtre à particules catalysé, on doit se limiter le plus souvent à une quantité de revêtement imprégnateur comprise entre 25 et 120 g/l (parfois jusqu'à 150 g/l), comprenant une charge en métaux précieux PGM correspondant à la charge d'un catalyseur sous caisse, par exemple comprise entre 10 et 60 g/ft³ , pour permettre l'écoulement des gaz par les parois, même si le filtre est du type rapproché.

De manière connue en soi, la charge en métaux précieux, ou plus précisément la charge en métaux du groupe du platine, comprend généralement un mélange de platine Pt et/ou de palladium Pd et/ou de rhodium Rh. On comprend que la capacité de traitement des HC, CO et NOx de tels filtres est amoindrie par rapport à un catalyseur trois voies classique.

On connaît de l'état de la technique plusieurs filtres à particules catalysés, combinant une fonction de filtration de particules fines avec une autre fonction de dépollution, qui visent à optimiser simultanément l'efficacité des deux fonctions. Par exemple, la publication WO2016/160915A1 divulgue un filtre à particules catalysé pour un moteur fonctionnant en mélange pauvre. Le filtre est du type à écoulement par les parois comme décrit dans les figures 1 à 3, et il présente sur sa face de sortie comprenant les bouchons obturant les canaux d'entrée des gaz, et sur une longueur qui ne dépasse pas 1,5 fois la longueur des bouchons, un revêtement d'imprégnation comprenant un métal du groupe du platine qui est apte à piéger des fuites d'ammoniac à la sortie du filtre. Néanmoins ce revêtement et plus particulièrement sa localisation en face arrière ne permet pas d'assurer le traitement des HC, CO et NOx contenus dans les gaz entrants.

### Présentation de l'invention

La présente invention vise à résoudre les défauts des filtres à particules catalysés pour moteurs à allumage commandé connus de l'état de la technique. Plus précisément, elle vise à améliorer la capacité de traitement des HC, CO et NOx des filtres à particules catalysés sans augmenter leur taille.

Elle propose pour cela un filtre à particules catalysé de moteur à allumage commandé, du type à écoulement par les parois, comprenant un monolithe de substrat dans lequel des parois poreuses, s'étendant longitudinalement entre une face d'entrée du filtre et une face de sortie du filtre, sont traversées par des gaz de combustion du moteur, lesdites parois étant interposées entre, d'une part, des canaux d'entrée longitudinaux ouverts sur ladite face d'entrée et fermés par un bouchon sur ladite face de sortie, et d'autre part, des canaux de sortie longitudinaux fermés par un bouchon sur ladite face d'entrée et ouverts sur ladite face de sortie, ledit monolithe de substrat étant imprégné sur au moins une partie de sa longueur par au moins un revêtement d'imprégnateur comprenant une composition catalytique comprenant au moins un métal du groupe du platine, ledit revêtement présentant une première charge d'imprégnation relativement faible avec une première charge en métaux du groupe du platine relativement faible.

La principale caractéristique du filtre selon l'invention est que le monolithe de substrat comprend, sur sa face d'entrée et sur une longueur d'entrée des canaux d'entrée qui est inférieure ou égale à la longueur des bouchons, un revêtement d'imprégnateur additionnel comprenant une composition catalytique comprenant au moins un métal du groupe du platine, ledit revêtement présentant une deuxième charge d'imprégnation relativement élevée avec une deuxième charge en métaux du groupe du platine relativement élevée.

### Brève description des figures

D'autres caractéristiques et avantages de l'invention apparaîtront à la lecture de la description qui suit de modes particuliers de réalisation de l'invention donnés à titre d'exemples non limitatifs et représentés sur les dessins annexés, dans lesquels :
[Fig. 1] est une vue en perspective cavalière d'un filtre à particules.
[Fig. 2] est une vue en perspective d'un segment du filtre de la figure 1.
[Fig. 3] est une coupe longitudinale d'un segment de la figure 2.
[Fig. 4] est une vue agrandie de l'extrémité amont d'un segment conforme à l'invention.
[Fig. 5] est une vue de détail de l'extrémité d'un bouchon dans une variante de réalisation.
[Fig. 6] est une vue de détail d'une autre variante de réalisation.

### Description détaillée des figures

Le filtre à particules catalysé selon l'invention possède les caractéristiques du filtre selon les figures 1 à 3 qui ont été décrites plus haut ou selon des variantes non représentées comme par exemple un filtre ayant un unique substrat de monolithe extrudé. En d'autres termes, il s'agit d'un filtre de type à écoulement par les parois, avec un monolithe de substrat qui est imprégné par un revêtement d'imprégnateur comprenant une composition catalytique comprenant au moins un métal du groupe du platine (PGM).

Ce revêtement (non représenté sur les figures) imprègne la surface latérale des canaux sur au moins une partie de leur longueur, de préférence sur la totalité de leur longueur, et il se peut qu'il pénètre plus ou moins profondément à l'intérieur de la structure poreuse des parois 7 elle-même. Conformément aux filtres catalysés connus de l'état de la technique, ce revêtement, ou premier revêtement, présente une première charge d'imprégnation WCL relativement faible, par exemple comprise entre 25 et 150 g/l, comprenant une première charge en métaux du groupe du platine PGM relativement faible, par exemple comprise entre 10 et 60 g/ft³ .

Selon l'invention, le filtre 1 comporte, sur sa face d'entrée des gaz et sur une longueur d'entrée des canaux d'entrée inférieure ou égale à la longueur des bouchons, une imprégnation additionnelle, par un deuxième revêtement d'imprégnateur comprenant au moins une composition catalytique comprenant au moins un métal du groupe du platine, ce revêtement additionnel présentant une deuxième charge d'imprégnation WCL relativement élevée, comprenant une deuxième charge en métaux précieux du groupe du platine PGM relativement élevée.

La deuxième charge d'imprégnation WCL relativement élevée est supérieure d'au moins 30% par rapport à la première charge d'imprégnation relativement faible, avec un écart d'au moins 50 g/l en plus par rapport à la première charge d'imprégnation. Dans un mode préféré, la deuxième charge d'imprégnation WCL est comparable à la charge d'imprégnation d'un catalyseur trois voies classique très chargé, c'est-à-dire supérieure à 200 g/l, par exemple comprise entre 200 et 250 g/l.

La deuxième charge en métaux du groupe du platine PGM relativement élevée est supérieure d'au moins 30% par rapport à la première charge en métaux du groupe du platine, 50 g/ft³ à la première charge en métaux précieux. Dans un mode préféré, elle est comparable à la charge d'imprégnation d'un catalyseur trois voies classique du type « rapproché » très chargé, c'est-à-dire de l'ordre de quelques centaines de grammes par pied cubique, par exemple comprise entre 150 et 250 g/ft³ .

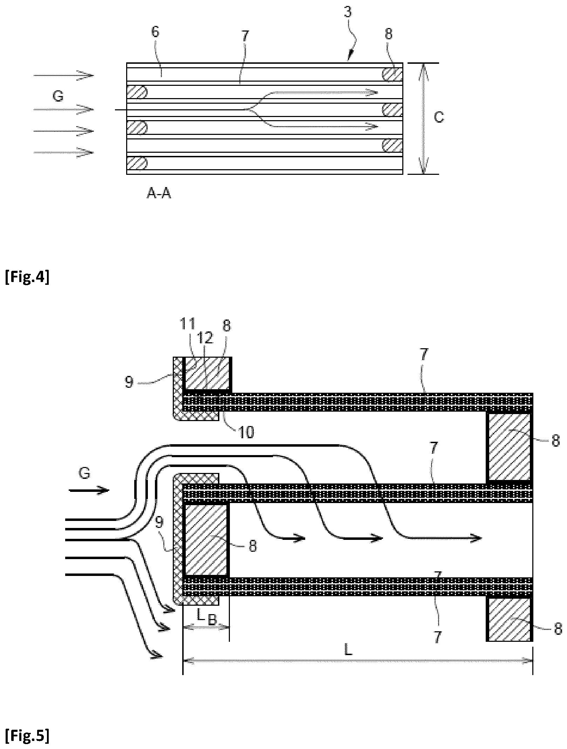

Sur la figure 4 on a représenté un premier mode de réalisation du filtre selon l'invention. Les bouchons 8 qui obturent les canaux 6, notamment les canaux d'entrée, se présentent sous la forme de parallélépipèdes de longueur L_{B} qui sont fixés sans jeu à l'entrée des parois 7. La face avant 11 de ces bouchons affleure la face avant 10 des canaux d'entrée, de sorte que la face avant du monolithe de substrat, ou du filtre, est une surface sensiblement plane comprenant les faces avant des parois 7 des canaux et les faces avant des bouchons 8 qui obturent les canaux de sortie. Un revêtement additionnel d'imprégnateur 9 est appliqué au moins sur la face avant du filtre, et il peut déborder à l'intérieur des canaux d'entrée sur les parois latérales 7 des canaux d'entrée, sur une longueur qui ne dépasse pas l'extrémité des bouchons.

L'avantage d'une telle imprégnation surfacique, relativement élevée, sur la face d'entrée du substrat de monolithe est que les métaux précieux déposés sur la face avant du filtre permettent une transformation accrue des polluants CO, HC et NOx contenus dans les gaz venant (presque perpendiculairement) au contact de la face avant. D'autre part, L'imprégnation additionnelle à l'intérieur des canaux d'entrée permet la même transformation améliorée des molécules polluantes sans avoir l'inconvénient de dégrader la contrepression dans le filtre, puisque la longueur d'imprégnation est limitée à la longueur des bouchons, qui délimite une zone qui était de toute façon étanche aux gaz à cause de la présence du bouchon.

La figure 5 représente un autre mode de réalisation de l'invention. Ici les bouchons d'entrée 8 présentent une tête 13, par exemple de forme bombée, qui dépasse la face avant 10 des canaux d'entrée et qui permet de mieux guider le flux de gaz entrant dans les canaux d'entrée. Ici également, l'imprégnation additionnelle 9 recouvre au moins la face d'entrée du filtre, qui est constituée de l'ensemble des faces bombées des têtes 13 de bouchon, et des parties des faces avant 10 des canaux d'entrée qui ne sont pas recouvertes par les têtes 13 des bouchons.

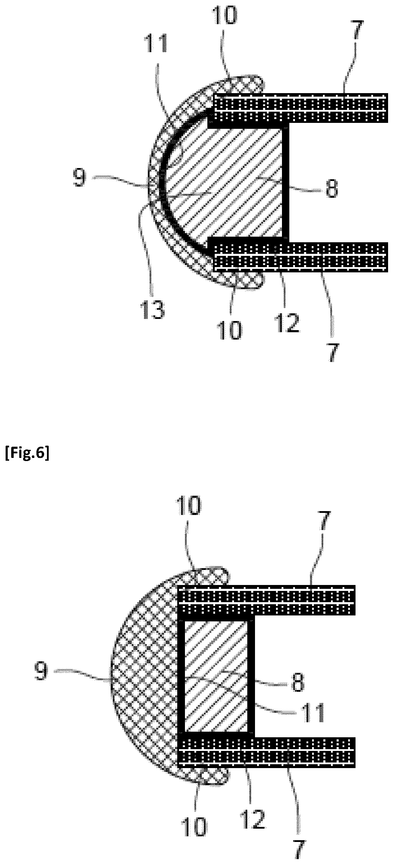

Bien entendu, d'autres variantes sont possibles sans sortir du cadre de l'invention. Par exemple, dans un troisième mode de réalisation représenté par la figure 6, la face avant des bouchons peut être plane conformément à la figure 8, et la couche d'imprégnation additionnelle peut présenter une épaisseur supérieure au centre des bouchons qu'à leur périphérie, de sorte que la face avant du filtre imprégné présente une forme similaire à celle de la figure 5.

## Revendications

1. Filtre à particules catalysé de moteur à allumage commandé, du type à écoulement par les parois, comprenant un monolithe de substrat (2) dans lequel des parois (7) poreuses, s'étendant longitudinalement entre une face d'entrée du filtre et une face de sortie du filtre, sont traversées par des gaz de combustion du moteur, lesdites parois (7) étant interposées entre, d'une part, des canaux d'entrée longitudinaux ouverts sur ladite face d'entrée et fermés par un bouchon sur ladite face de sortie, et, d'autre part, des canaux de sortie longitudinaux fermés par un bouchon (8) sur ladite face d'entrée et ouverts sur ladite face de sortie, ledit monolithe de substrat (2) étant imprégné sur au moins une partie de sa longueur (L) par au moins un revêtement d'imprégnateur comprenant une composition catalytique comprenant au moins un métal du groupe du platine, ledit revêtement présentant une première charge d'imprégnation (WCL) relativement faible avec une première charge en métaux du groupe du platine (PGM) relativement faible,
**CARACTERISE EN CE QU'**
le monolithe de substrat (2) comprend, sur sa face d'entrée et sur une longueur d'entrée des canaux d'entrée qui est inférieure ou égale à la longueur (L_{B}) des bouchons (8), un revêtement d'imprégnateur additionnel comprenant une composition catalytique comprenant au moins un métal du groupe du platine, ledit revêtement présentant une deuxième charge d'imprégnation (WCL) relativement élevée avec une deuxième charge en métaux du groupe du platine (PGM) relativement élevée.

2. Filtre selon la revendication 1, dans lequel la deuxième charge d'imprégnation (WCL) est supérieure d'au moins 30% par rapport à la première charge d'imprégnation, et qu'elle lui est supérieure d'au moins 50 g/l.

3. Filtre selon l'une quelconque des revendications précédentes, dans lequel la deuxième charge d'imprégnation (WCL) est supérieure à 200 g/l, et de préférence comprise entre 200 et 250 g/l.

4. Filtre selon l'une quelconque des revendications précédentes, dans lequel la deuxième charge en métaux du groupe du platine (PGM) est supérieure d'au moins 30% par rapport à la première charge en métaux du groupe du platine, et qu'elle lui est supérieure d'au moins 50 g/ft³ .

5. Filtre selon l'une quelconque des revendications précédentes, dans lequel la deuxième charge en métaux précieux du groupe du platine (PGM) est de l'ordre de quelques centaines de grammes par pied cubique, et de préférence comprise entre 150 et 250 g/ft³.
